# FASCICULE DE BREVET EUROPEEN

(11) **EP 0 777 170 B1**
(45) Date de publication et mention de la délivrance du brevet: **03.06.1998**
(21) Numéro de dépôt: 96402333.7
(22) Date de dépôt: 31.10.1996
(51) Int. Cl.: G05D 23/19, G05B 13/02, F24D 19/10, F24H 9/20

(54) **Dispositif de commande d'un appareil électrique**
Steuereinrichtung für ein elektrisches Gerät
Control device for an electric appliance

(30) Priorité: 30.11.1995 FR 9514185
(43) Date de publication de la demande: 04.06.1997
(73) Titulaire: SGS-THOMSON MICROELECTRONICS SA, 94250 Gentilly (FR)
(72) Inventeur: Le Van Suu, Maurice G., 75116 Paris (FR)
(74) Mandataire: Schmit, Christian Norbert Marie

(56) Documents cités:
- EP-A- 0 633 515
- US-A- 5 148 977
- US-A- 5 287 154
- US-A- 5 311 268
- US-A- 5 410 890

## Description

La présente invention a pour objet un dispositif de commande d'un appareil électrique quelconque. Elle concerne néanmoins plus particulièrement les dispositifs de commande de régulation, ou de régulation. Elle concerne également les appareils alimentés électriquement et commandés par ailleurs par un circuit de commande pour lesquels on ajoute une fonction supplémentaire au circuit de commande.

L'invention sera décrite dans le cas ou l'appareil est un radiateur électrique. Mais cet appareil pourrait néanmoins être tout autre appareil: un appareil électroménager ou industriel, et possédant la particularité d'être électrique, alimenté par une alimentation électrique (par exemple le secteur), et par ailleurs possédant un circuit de commande.

Dans le domaine de la commande des appareils électriques, notamment des radiateurs, il est connu d'assurer les fonctions de commande avec des circuits électroniques, notamment des circuits électroniques comportant des processeurs ou microprocesseurs associés à des mémoires programmes et à des circuits périphériques de commande. Dans le domaine des radiateurs électriques on connaît notamment le circuit dit UAA2016 de Motorola qui permet de réguler la puissance thermique dissipée par un radiateur en fonction d'une mesure de la température ambiante et d'une température de consigne affichée par un utilisateur sur un bouton de commande. Dans la pratique le capteur de température est une résistance de type CTN.

Ces résistances ont l'inconvénient de subir des dérives dans le temps (vieillissement du composant). Par exemple au bout de plusieurs années le signal délivré par la résistance n'est plus le même qu'au début. En plus il survient un problème de non linéarité. Pour remédier à ces inconvénients, le circuit précité comporte la possibilité de tenir compte d'une autre résistance de même type, placée en un autre endroit à proximité du radiateur (en général en bas du radiateur), de manière à compenser les dérives ou les non linéarités. Cette manière de faire présente l'inconvénient que le dispositif réalisé est cher parce que les résistances de type CTN sont elle-mêmes chères pour avoir des composants les plus linéaires possibles. Il présente également l'inconvénient de nécessiter des études longues et laborieuses pour la mise au point de la fonction de transfert de régulation pilotée par ce circuit. En effet, cette fonction de transfert dépend en grande partie de la géométrie du radiateur et notamment de la position des résistances CTN de détection aux différents endroits du radiateur. Ce procédé présente par ailleurs un problème inévitable: il ne tient pas compte de la dimension de la pièce et de l'endroit dans la pièce où est placé le radiateur. Le circuit concerné, quand il assure sa fonction de régulation, délivre un signal qui est transmis à un circuit de mise en conduction des résistances thermiques du radiateur. Ce circuit de mise en conduction est en définitive le circuit d'utilisation du signal de régulation, du signal de commande.

Un problème survient de plus lorsque, au-delà d'une régulation imposée par un opérateur sur un radiateur concerné, on veut pouvoir piloter une installation générale de chauffage de manière à respecter différents modes de fonctionnement: par exemple un mode confort, pendant lequel la température dans une maison en entier doit être de l'ordre de 19° ou de 20°, un mode économique, pendant lequel cette température doit être comprise entre 10° et 15° et correspondant aux périodes où la maison est habitée mais où il n'y a personne dedans: par exemple entre 10 heures du matin et 4 heures de l'après-midi pour les gens qui sont partis à leur travail. On peut vouloir aussi réaliser un mode dit hors gel correspondant à des situations dans lesquelles il n'y a jamais personne dans la maison mais ou pour des raisons de protection des installations sanitaires il importe de ne pas laisser geler la maison: on impose alors une température minimum de 7°. Il peut y avoir enfin un mode arrêt dans lequel l'installation est définitivement arrêtée et quels que soient les ordres appliqués sur chacun des radiateurs ils ne peuvent se mettre à produire de la chaleur.

Le circuit évoqué ci-dessus n'est pas capable de gérer cette information dite de pilotage. Aussi on a pris l'habitude de rajouter à ce circuit de régulation un microcontrôleur supplémentaire dont le signal est en définitive un signal de validation ou de modification du fonctionnement du circuit précité. Ce microcontrôleur supplémentaire reçoit par un fil dit fil pilote l'information en provenance de la commande générale de la maison par laquelle l'utilisateur a imposé un mode général de fonctionnement. En pratique le fil pilote peut être un fil ou un bus, l'essentiel étant qu'il achemine l'information de mode de fonctionnement.

Il apparaît alors dans ce cas que le traitement de l'information du fil pilote par le micro contrôleur devient prioritaire par rapport à la régulation exercée par le circuit précité. En effet la constante de temps de régulation est longue par rapport à la durée de la réception de l'information de télécommande du fil pilote qui d'une part est courte et qui d'autre part est aléatoire. Par exemple l'information du fil pilote peut avoir une durée de 20 millisecondes. Dans ce cas le système du microcontrôleur gèrera une interruption. Outre l'obligation de rajouter le microcontrôleur, ce dispositif continue à rester cher du fait de la présence des deux résistances de types CTN.

Par ailleurs, une nouvelle norme, notamment la norme européenne ICE 555-1/2/3 impose de limiter la valeur des impédances réactives engendrées par les consommations intempestives du courant électrique secteur. En effet, au moment d'une mise sous tension d'un appareil, il est possible que la phase du secteur corresponde à un ventre de tension ou de courant. Dans ces conditions l'appel de courant est très fort et provoque du fait des consommations électriques diverses une distorsion du signal existant sur le réseau. Cette distorsion conduit à la présence d'harmoniques, notamment d'harmonique 3 (à 150 Herz) qui sont préjudiciables au fonctionnement des générateurs producteurs d'électricité ou qui produisent des rayonnements électromagnétiques et des parasites pertubant le bon fonctionnement des appareils électriques voisins. Pour éviter cet inconvénient, il est convenu que les appareils électriques devront se déclencher d'une manière préférée au moment ou le courant électrique de secteur passe par zéro.

Dans le contexte évoqué ci-dessus, au caractère aléatoire de la commande du fil pilote s'ajoute maintenant la nécessité de prendre en compte le moment du passage par zéro de l'alimentation secteur. Ceci va en définitive contribuer à compliquer encore le circuit de commande de l'appareil: de commande de radiateur dans le cas décrit ici. En outre, autant la commande des fils pilotes pouvait être considérée comme prioritaire vis-à-vis de la commande de régulation, autant maintenant il n'est plus possible de considérer la commande liée au passage par zéro du courant électrique d'alimentation comme prioritaire par rapport à la commande des fils pilotes. En effet, la prise en compte de l'une peut, si on lui donne priorité, empêcher la prise en compte de l'autre qui serait délivrée simultanément.

Donc le problème à résoudre n'est pas seulement celui de rajouter un autre microcontrôleur qui gérerait un autre problème, il est de gérer en même temps les problèmes de conflits temporels qui peuvent se présenter du fait de la simultanéité des deux commandes. D'une manière générale il en ira de même lorsque à un fonctionnement de type connu d'un appareil quelconque on veut apporter une première commande supplémentaire ou une deuxième commande supplémentaire.

L'invention a pour objet de remédier à ces problèmes. Dans l'invention, on a décider de reposer le problème complètement différemment. Plutôt que de réaliser un circuit spécifique du type de celui précité dont la mise au point est par ailleurs laborieuse on a choisi de réaliser un circuit de type logique floue. On montrera qu'avec un tel circuit de logique floue ainsi élaboré on va pouvoir s'affranchir du problème lié aux dérives ou aux non linéarités des capteurs. On pourra alors se contenter d'un seul capteur de température. La dérive du capteur sera gérée par le programme de logique floue mis en oeuvre par le circuit.

Les documents US-A-5 148 977 et US-A-5 410 890 décrivent par exemple des systèmes de commande d'air conditionné utilisant des circuits de type logique floue.

En outre, la gestion d'une information de télécommande, par exemple de type fil pilote ou de type synchronisation sur le passage par zéro de la tension, est prise en compte dans l'invention en rajoutant tout simplement un jeu de fonctions d'appartenance liées à la présence de la nouvelle information à traiter: l'information de fil pilote ou de passage par zéro. Autrement dit l'information de fil pilote ou de passage par zéro va être traitée comme une des variables gérées par ailleurs par le circuit de logique floue.

Le circuit de logique floue comprenant un ensemble de règle de type "si le résultat d'un capteur est dans un état donné alors le résultat de la commande doit être dans un état donné" sera, dans l'invention, complété par une règle de type suivant "si le capteur est dans un état donné, et si l'information de fil pilote (ou de passage par zéro) est dans un état donné, alors la commande doit être dans un état donné". Cette manière de faire générale permet de prendre en compte tout à fait naturellement autant de contraintes extérieures qu'on le veut. Bien entendu il est possible de combiner ensemble la présence du capteur de température, la présence de l'information de fil pilote, et la présence du capteur de détection du passage par zéro du courant d'alimentation. On montrera par la suite que le choix de cette solution permet de tenir compte d'une manière particulièrement simple des situations les plus variées, pour les appareils les plus divers.

L'invention concerne donc un dispositif de commande du fonctionnement d'un appareil comportant au moins un capteur de mesure, un circuit de commande de ce fonctionnement en fonction d'un signal émis par le capteur, et une entrée d'alimentation en puissance électrique alternative de l'appareil, caractérisé en ce qu'il comporte:
- une mémoire dite programme contenant un jeu de fonctions d'appartenance, un jeu de règles de décision, et un programme de logique floue (qui correspondent à un modèle de logique floue du système décrit),
- un processeur de logique floue servant pour élaborer un signal de décision qui dépende à la fois du signal émis par le capteur, de ces fonctions d'appartenance, et de ces règles, et servant pour commander le fonctionnement de cet appareil avec ce signal de décision, et
- dans la mémoire dite programme, des fonctions d'appartenance supplémentaire qui prennent en compte à titre de variable des signaux disponibles sur l'entrée d'alimentation électrique, et des règles qui tiennent compte de ces fonctions d'appartenance.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- figure 1: un dispositif de commande du fonctionnement d'un appareil conforme à l'invention;
- figures 2a et 2b: des exemples de forme de fonction d'appartenance ;
- figures 3a à 3c: des exemples de fonctions d'appartenance respectivement de la variable température, d'une variable différente de température et de la variable de commande de l'appareil;
- figures 4a à 4c: les représentations schématiques d'un exemple préféré des fonctions d'appartenance respectivement des fils pilotes et du passage par zéro de la tension d'alimentation.

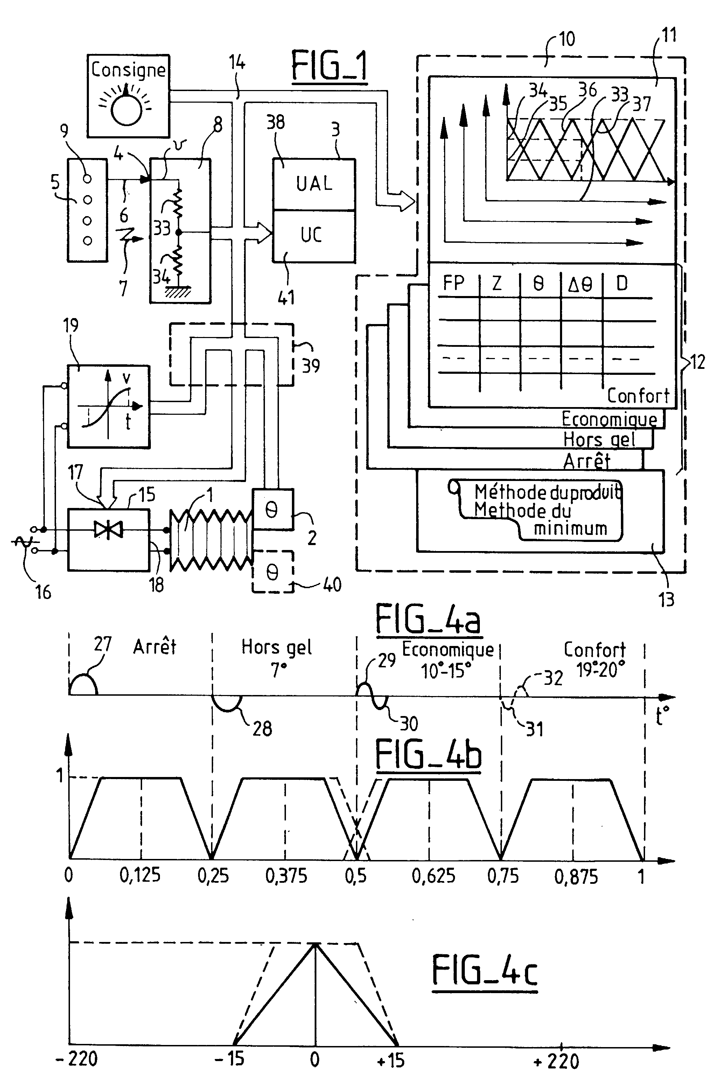

La figure 1 montre un dispositif de commande du fonctionnement d'un appareil. Dans le cas présent l'appareil est un radiateur 1. Le dispositif comporte principalement un capteur de mesure, ici pour simplifier un capteur 2 de température Θ, par exemple une résistance de type CTN plaquée au sommet du radiateur. Son signal tient compte de la température du sommet du radiateur et de la température ambiante au haut de ce radiateur. Le dispositif de commande comporte en plus un circuit de commande de ce fonctionnement. Dans l'exemple représenté, le circuit de commande comporte un microprocesseur 3, muni essentiellement d'une unité arithmétique et logique de traitement, ainsi que d'autres organes associés qu'on verra plus loin. Le dispositif de commande comporte également une entrée de commande 4 de changement de mode pour recevoir un signal de changement de mode. Dans un exemple, le signal de changement de mode est délivré par un boîtier de commande 5 relié électriquement 6 ou électromagnétiquement 7 à un circuit 8 de prise en compte de l'ordre de changement de mode. Le boîtier 5 comporte un ensemble de boutons tels que 9 pour délivrer le signal de changement de mode adéquat au mode choisi. Dans l'état de la technique le signal du boîtier 5 aboutissait sur le microcontrôleur. La sortie du microcontrôleur commandait le fonctionnement du circuit de régulation précité.

Dans l'invention le dispositif de commande comporte en outre une mémoire programme 10 qui contient un jeu 11 de fonctions d'appartenance, un jeu 12 de règles de décisions, et un programme 13 de logique floue correspondent au modèle flou du système.

Le microprocesseur 3, du circuit de commande est un processeur de logique floue qui sert pour élaborer un signal de décision. Ce signal de décision est fonction du signal émis par le capteur 2, et est fonction, en application du programme de logique floue, du jeu 11 des fonctions d'appartenance et du jeu 12 des règles de décision. Comme on le verra plus loin les fonctions d'appartenance comportent des fonctions d'appartenance liées à la présence de l'information fil pilote et les règles de décisions prennent en compte la valeur de ces fonctions d'appartenance pour élaborer le résultat: la décision.

Ces circuits sont mis en relation entre eux par un bus 14 qui, pour simplifier l'explication, servira à acheminer à la fois les adresses, les données, et les commandes. Le bus 14 est par ailleurs en relation, avec un circuit 15 de mise en service de l'appareil 1. Dans le cas ou l'appareil 1 est un radiateur de chauffage, le circuit 15 comportera tout simplement un jeu de triacs dont la commutation sera organisée en fonction de la puissance désirée à dissiper avec le radiateur 1. Dans le cas ou l'appareil 1 est un moteur, le circuit 15 pourra être un circuit de conversion de l'information de décision en une série d'impulsions modulées en durée (de type PWM). En pratique le circuit 15 est relié au secteur électrique 16, reçoit sur une entrée 17 le signal de décision, et délivre en sortie une puissance électrique nécessaire au fonctionnement choisi de l'appareil 1.

Le dispositif de l'invention comporte encore un circuit 19 de détection du passage par zéro du courant d'alimentation. Le circuit 19 est un circuit de type connu. Il est représenté ici par un symbolisme montrant le passage par zéro de la tension V alternative en fonction du temps t. De manière connue, ce circuit comportera un circuit redresseur, ou de préférence un convertisseur analogique-numérique susceptible de transformer le signal alternatif de secteur en une information numérique: positive ou négative selon l'alternance. Le circuit 19 comportera encore un comparateur pour comparer la valeur absolue du signal délivré par le convertisseur analogique-numérique et pour délivrer un signal correspondant à la différence entre cette valeur absolue et cette valeur de référence. Cette différence est éliminée quand elle est positive (correspondant aux périodes où la valeur absolue de la tension est supérieure à la référence). Elle est prise en compte avec le signe de l'alternance lorsqu'elle y est inférieure. Le signal délivré par le circuit 19 est acheminé dans les mêmes conditions par le bus 14 et correspond, dans le jeu 11 des fonctions d'appartenance à des fonctions d'appartenance de type prise en compte du zéro de tension et dans le jeu 12 des règles à une condition portant sur la valeur de ces fonctions d'appartenance.

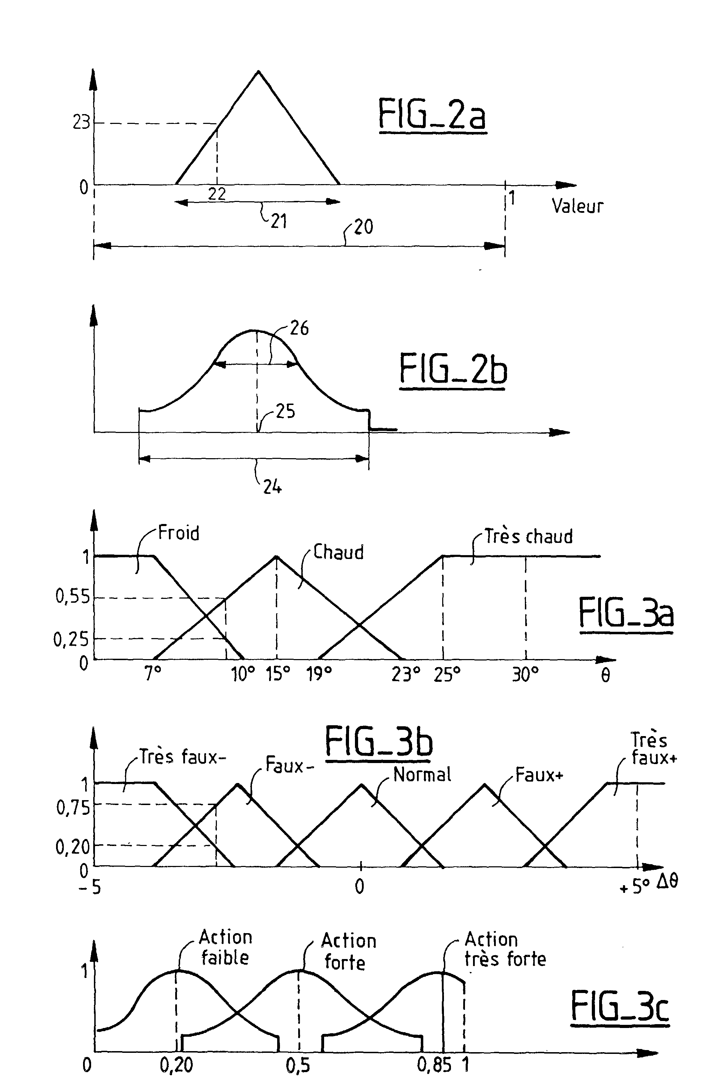

Les figures 2a et 2b montrent des formes de fonctions d'appartenance possibles. La figure 2a montre pour une dynamique totale 20 d'une valeur comprise entre deux bornes, par exemple ici entre 0 et 1, une plage de valeur réduite 21. La dynamique 20 de 0 à 1 est en fait une dynamique normalisée. Dans ce but on prendra pour chaque capteur de mesure le rapport de la valeur mesurée à la valeur totale de la dynamique de mesure. La normalisation n'est pas une nécessité mais dans bien des cas elle peut être plus pratique pour mettre en oeuvre le procédé de l'invention. En effet, dans ce cas les formes des fonctions d'appartenance peuvent être elle-mêmes normalisées.

Une fonction d'appartenance est une courbe révélant la relation entre une abscisse: une valeur de mesure, et une ordonnée: un coefficient d'appartenance. Cette courbe est qualifiée par un phénomène qu'elle représente: par exemple un phénomène de chaleur dit "chaud" ou "très chaud". Pour chaque valeur mesurée, on peut en se reportant sur la courbe déterminer un coefficient d'appartenance. Le coefficient d'appartenance est alors une quantification d'une déclaration selon laquelle un objet pour lequel la valeur a été mesurée est réputé appartenir au phénomène, à une plage. Par exemple, on dira que pour un objet produisant la valeur 22, le coefficient d'appartenance à la fonction d'appartenance liée à la plage 21 a une valeur 23. Les fonctions d'appartenance ont des formes isocèles, scalènes ou autres, et les coefficients possèdent des valeurs nulles à l'extérieur de la plage, et une valeur maximale pour une valeur donnée. Les fonctions d'appartenance de résultat possédent une valeur moyenne ou un barycentre avec un coefficient de pondération lié à la surface et à la position de la fonction d'appartenance.

La figure 2a montre les formes des fonctions d'appartenance utilisées pour les capteurs de mesure, ainsi que de préférence pour la gestion de la consigne, la gestion de l'information du fil pilote, ou la gestion du passage par zéro de la tension. La figure 2b montre une autre forme de fonction d'appartenance en forme de gaussienne tronquée comprise dans une plage 24 avec une valeur moyenne 25 et un écart type 26. Dans certains cas, quand la fonction de transfert, à simuler est fortement non linéaire, on préfèrera pour les fonctions d'appartenance de résultat utiliser des formes gaussiennes tronquées. Dans d'autres cas, on préfèrera des formes triangulaires. Selon leur forme, elles permettent une meilleure appréciation de la décision à appliquer, compte tenu des mesures effectuées.

Les figures 3a à 3c montrent, une mise en oeuvre partielle du dispositif de l'invention. La figure 3a montre des fonctions d'appartenance de la mesure de température. Elle montre en particulier une première fonction dite froid, une seconde fonction dite chaud et une troisième fonction dite très chaud. La première fonction dite froid indique, avec une forme de trapèze droit, qu'en dessous de 7° on dira qu'il fait froid avec certitude, le coefficient valant 1, alors qu'entre 7° et 10°, on dira qu'il fait froid avec une certitude décroissant proportionnellement avec l'évolution de la température entre 7° et 10°. La fonction d'appartenance en température dite chaud indique que l'on considèrera qu'il fait chaud, avec un coefficient allant de 0 à 1, selon que la température mesurée évolue de 7° à 15°, puis avec un coefficient décroissant de 1 à 0 selon que la température passe de 15° à 23°. La troisième fonction d'appartenance indique qu'on considérera qu'il fait très chaud avec un coefficient valant respectivement de 0 à 1 puis toujours 1 selon que la température évolue de 19° à 25° puis de 25° à 30°.

La figure 3b est relative à la prise en compte de la valeur de consigne affichée par un utilisateur sur le radiateur qui est en face de lui ou sur l'appareil qu'il cherche à commander. Cette consigne peut être prise en compte telle qu'elle. Ou elle peut être prise en compte par différence par rapport à la valeur mesurée par le capteur. Dans l'exemple représenté sur la figure 3b, on aura préféré représenter la différence existant entre la valeur que veut imposer à titre de consigne l'utilisateur et la valeur qu'indique le capteur. Cette valeur peut alors appartenir à des fonctions d'appartenance dites normal, faux-, faux+, très faux- ou très faux+. Dans l'exemple les formes sont celles représentées sur la figure 3b l'écart maximale tolérable étant de l'ordre de 5°.

La figure 3c montre des fonctions d'appartenance de décision indiquant que l'action à exercer peut être faible, forte ou très forte. Comme indiqué précédemment les fonctions d'appartenance des décisions, donc des actions, ont des formes en gaussiennes tronquées. Alors que les figure 3a et 3b comportent en abscisse des valeurs non normalisées, en degré, la figure 3c comporte des valeurs normalisées comprises entre 0 et 1.

Selon l'invention, figures 4a à 4c, on va prendre en compte maintenant d'une manière supplémentaire les informations données par le fil pilote (figure 4a, 4b), ou par la détection du passage par zéro de la tension d'alimentation électrique (figure 4c). La figure 4a montre en abscisse, sur une évolution de température t°, des plages correspondant à des modes de fonctionnement de l'appareil. Elle montre également une allure du signal du fil pilote correspondant à chaque mode. La figure 4b reprend ces éléments en quantifiant le signal de fil pilote entre 0 et 1. On déterminera que pour une première plage de ce signal, où la valeur de la variable est comprise entre 0 et 0,25, le mode de fonctionnement sera un mode d'arrêt. Dans une deuxième plage comprise entre 0,25 et 0,5 le mode de fonctionnement est un mode dit hors gel correspondant à un maintien de la température de la pièce et généralement de l'édifice au dessus de 7°. Dans une troisième plage dans laquelle les valeurs de la variable sont comprises entre 0,5 et 0,75 le mode sera le mode économique dans lequel la température de l'édifice devra être comprise entre 10° et 15°. Dans le quatrième mode pour des valeurs de variables comprises entre 0,75 et 1 l'édifice devra être maintenu à une température comprise entre 19° et 20° (ou à une autre température affichée par l'utilisateur).

Le circuit 8 qui prend en compte les ordres de changement de mode va être décrit d'une manière simplifiée maintenant. Les ordres de changement de mode sont normalement normalisés. Le passage en mode arrêt est normalement imposé par l'envoi sur le fil de pilote 6 d'une impulsion positive 27. Le changement de mode en mise hors gel est obtenu par envoi sur le même fil 6 d'une impulsion négative 28. Le passage en mode économique est obtenu par l'envoi d'une impulsion positive 29 suivie d'une impulsion négative 30. Le passage en mode confort peut être soit automatique (résultant d'une temporisation), soit réalisé par l'envoi sur le fil pilote 6 d'une impulsion négative 31 suivie d'une impulsion négative 32. Le circuit 8 comportera un décodeur pour décoder l'apparition de ces impulsions. Ce circuit décodeur va pouvoir dans un exemple produire une tension v, appliquée sur un pont diviseur de résistances (montré ici schématiquement) 33 34. Le point milieu du pont diviseur de résistance peut alors délivrer un signal de tension qui, une fois normalisé, sera compris entre 0 et 1, et de préférence avec des valeurs moyennes égales à 0,125 0,375 0,625 0,875. Pour tenir compte des dérives de ces résistances, ou plutôt de la tolérance de leur dispersion de valeur lors de la réalisation du pont, il est également possible que les fonctions d'appartenance se recoupent. Par exemple on a montré en tirets que la fonction d'appartenance hors gel recoupe la fonction d'appartenance économique de telle façon que la somme des coefficients d'appartenance de ces deux fonctions d'appartenance soit toujours égale à 1. Autrement dit l'information dite de fil pilote est une information délivrée par le circuit 8 valant entre 0 et 1 selon la valeur du signal émanent du boîtier 5.

La figure 4c représente une seule fonction d'appartenance correspondant à la prise en compte du passage par zéro du signal d'alimentation électrique de l'appareil. Selon cette fonction d'appartenance, le coefficient d'appartenance n'est significatif (différent de zéro) que si le signal d'alimentation électrique est compris par exemple entre -15 volts et +15 volts, (pour une mesure de la tension). Si on mesure le courant, on déterminera une valeur d'intensité du signal électrique utile.

On a représenté deux formes de la fonction d'appartenance, une forme triangulaire selon laquelle le coefficient passe linéairement de zéro à un et de un à zéro selon que la tension passe de -15 à zéro puis de zéro à 15, et une forme trapézoïdale. Ces deux formes de fonction d'appartenance ont des effets de prise en compte plus ou moins brutale de l'information: on choisira l'une ou l'autre selon les contraintes auxquelles on est soumis, notamment les contraints de distorsion harmonique du signal d'alimentation électrique.

Le fonctionnement du dispositif de l'invention est le suivant. En ordre de marche, le signal de consigne, le signal délivré par le capteur 2, le signal délivré par le circuit 8, et celui délivré par le circuit 19 sont transmis au microprocesseur 3. Cette transmission s'accompagne de toutes les transformations habituelles: conversion analogique-numérique, normalisation si le besoin s'en fait sentir, ainsi que multiplexage si le bus 14 est commun: chaque capteur envoyant ses données à son tour. Chacune de ces données est alors utilisée dans les fonctions d'appartenance qui la concerne. En pratique, chaque donnée est équivalente à une abscisse 33 donnant lieu à l'évaluation de coefficients d'appartenance, ici respectivement 34 et 35, des fonctions d'appartenance respectivement 36 et 37 pour lesquelles ces coefficients sont non nuls. Par exemple le coefficient 34 vaudra 0,66 alors que le coefficient 35 vaudra 0,33. Cette évaluation est tout simplement une lecture d'une table dans laquelle l'adresse est la valeur de la mesure (la donnée transmise au microprocesseur 3), et dans laquelle la valeur lue est le coefficient d'appartenance correspondant.

Ceci étant acquis, les coefficients 0,33, 0,66 etc. étant aussi éventuellement calculés par l'unité arithmétique et logique 38 du microprocesseur 3, on va passer à l'évaluation du signal de commande correspondant qu'il faut appliquer par le circuit 15 à l'appareil 1. Cette évaluation passe par la prise en compte d'un certain nombre de règles contenues dans le jeu 12 des règles. Les règles sont du type, pour simplifier, si la température θ mesurée est chaude (voir figure 3a), et si l'écart de température est faux - (voir figure 3b), alors l'action à engager (la décision D) doit être une action faible. En effet, dans ce cas, il n'est pas nécessaire de chauffer très fort puisque l'écart de température est faible. Une autre règle peut être, si la température mesurée appartient à la fonction d'appartenance froid, et si l'écart de température par rapport à la grandeur de consigne indique une fonction d'appartenance très faux -, alors l'action à engendrer sera soit une action forte ou éventuellement même une action très forte. Ainsi de suite. On voit que pour deux signaux d'entrée, ici la mesure de température et, d'une manière indirecte, la grandeur de consigne (puisqu'on fait la différence entre la valeur de consigne et la température mesurée), il y a un certain nombre de situations. Si on considère qu'il y a M fonctions d'appartenance pour la mesure de température et N fonctions d'appartenance pour la mesure de l'écart, il y aura au total M x N situations possibles. Autrement dit, le système conduira à établir M x N règles. Dans le cas présente, il y a quinze règles puisque M vaut 3 et N vaut 5.

Ce que l'invention apporte en plus est de prendre en compte l'information de fil pilote. Comme cette information de fil pilote, figure 4b, peut avoir seulement quatre fonctions d'appartenance, cela revient à avoir quatre jeux de M x N = 15 règles soit soixante règles en total. Sur la figure 1 les jeux des règles possibles sont indiqués confort, économique, hors-gel, ou arrêt selon le but à atteindre.

De la même façon, la prise en compte du passage par zéro de l'alimentation se fera par la modification du jeu de règles. Ainsi, la fonction d'appartenance de la figure 4c est une fonction d'appartenance dite autorisation, parce que, autour de zéro, on autorise le déclenchement de l'appareil alors que quand la tension est en dehors de cette plage proche de zéro, on n'autorisera pas le démarrage de l'appareil. Le jeu de règles comporte alors, dans les soixante règles évoquées, une condition supplémentaire: est-ce que par ailleurs la variable de mesure du passage par zéro de la tension d'alimentation appartient à la fonction d'appartenance autorisation ou non. Il suffira alors de rajouter une soixante-et-unième règle indiquant que quand la variable de mesure du passage par zéro de la tension d'alimentation n'appartiendra pas à la fonction d'appartenance autorisation, la décision sera de ne rien faire.

On va voir maintenant comment on commande en pratique l'appareil 1 avec cette organisation de fonctions d'appartenance et de règles. Les fonctions d'appartenances ou règles peuvent être programmées manuellement dans la mémoire 10 ou être le résultat d'une simulation faite sur un ensemble d'appareils de type 1. Elles peuvent aussi être le résultat d'un traitement effectué par le logiciel dit WARP de SGS THOMSON MICROELECTRONICS. La mise en oeuvre de la logique floue peut se faire ensuite, selon plusieurs méthodes, en particulier selon une méthode dite du produit ou selon une méthode dite du minimum. On va décrire cette dernière, sachant que d'autres méthodes sont connues dont le but est de permettre l'élaboration d'un signal de décision.

La méthode du minimum consiste à ne prendre en compte que les règles pour lesquelles les coefficients d'appartenance aux fonctions désignées dans la règle sont non nuls. Par exemple, figure 3a, si la température mesurée vaut 9,5° le coefficient d'appartenance du phénomène à la fonction d'appartenance froid sera de 0,25. Il sera de 0,55 à la fonction d'appartenance chaud. Si par ailleurs l'écart de température est un écart de 4°, en négatif, tel que cet écart appartienne à la fonction d'appartenance très faux - avec le coefficient 0,75 et à la fonction d'appartenance faux - avec le coefficient 0,20; et si par ailleurs, pour simplifier, l'information de fil pilote appartient à la fonction d'appartenance économique avec le coefficient 1 et la fonction de passage à zéro appartient à la fonction d'appartenance autorisation avec le coefficient 1, on aura quatre règles qui seront impliquées. On aura affaire à la règle froid et très faux -, à la règle froid et faux -, à la règle chaud et très faux - et à la règle chaud et faux -. Dans la règle froid et très faux -, les coefficient impliqués sont 0,25 pour la fonction d'appartenance froid et 0,75 pour la fonction très faux -. Le coefficient minimum pour cette règle est donc 0,25 (celui concernant la fonction d'appartenance froid). On dira alors que la règle froid et très faux - doit conduire à une action forte avec un coefficient de 0,25. La règle impliquant la fonction d'appartenance chaud (avec un coefficient d'appartenance 0,55), et la fonction d'appartenance très faux - avec un coefficient d'appartenance de 0,75 impliquera elle une action forte avec un coefficient qui est le minimum des deux: ici 0,55. Ainsi de suite pour les quatre règles on obtiendra respectivement des résultats d'action très forte avec un coefficient de 0,25, d'action forte avec un coefficient de 0,55 et ainsi de suite... Pour connaître la valeur du signal de décision proprement dit, on multiplie la valeur moyenne des fonctions d'appartenance de décision par le coefficient retenu. Par exemple, pour l'action forte la valeur moyenne est de 0,5. Pour l'action faible la valeur moyenne est de 0,2. Pour l'action très forte elle est de 0,85. On somme alors le produit de ces valeurs moyennes par les coefficients minima et on divise cette somme par le nombre de règles impliquées. On obtient un signal de décision qui a une valeur et on utilise cette valeur dans le circuit 15 pour commander l'appareil 1.

La figure 1 montre encore, en tirets, un circuit 39 interposé sur le bus 14 pour permettre la liaison entre l'appareil et le microprocesseur 3. Ce circuit 39 est de préférence une cellule de couplage par courant porteur susceptible de recevoir, par courant porteur, le signal délivré par la thermistance CTN 2, éventuellement par une autre thermistance de compensation 40 (qu'il est de toute façon possible d'installer également dans le dispositif de l'invention), le signal de détection de passage par zéro produit par le circuit 19 et par contre de transmettre dans l'autre sens les signaux de décision D à appliquer sur l'entrée 17 du circuit 15. La cellule 39 peut par ailleurs être gérée d'une manière autonome ou être gérée par une unité de contrôle 41 du microprocesseur 3 qui contrôle par ailleurs tous les autres organes de son environnement.

Compte tenu de la consommation provoquée par le microprocesseur 3, et compte tenu qu'on a réalisé un circuit 19 du passage par zéro de la tension d'alimentation, on utilise par ailleurs le signal délivré par ce circuit pour mettre en sommeil le microprocesseur 3 hors des périodes où ce signal est proche de zéro. La mise en sommeil de ce microprocesseur 3 n'est pas un problème parce que, au moment de son réveil, la seule chose qu'il a à faire est de trouver sur les fonctions d'appartenance du jeu 11 des fonctions d'appartenance des valeurs des coefficients correspondants. Il s'agit en pratique de lecture de tables, comportant autant de tables qu'il y a de plages de fonctions d'appartenance pour les différentes variables. Dans l'exemple évoqué jusqu'ici il y a au total dix tables. Dans un exemple, la mémoire 10 est une mémoire de 1 kilo-octet. Donc le microprocesseur 3 doit effectuer dix lectures et avec les résultats de ces dix lectures, il doit les appliquer à soixante-et-une règles. La méthode du minimum décrite conduit à réaliser une accumulation sur un nombre limité de règles, quatre ou cinq en général, et à faire une division (dont éventuellement on peut se passer). Ces opérations peuvent être effectuées par le microprocesseur 3 très rapidement. Par exemple pour un microprocesseur cadencé à 11 MHz, ce résultat peut être acquis en moins d'une centaine de temps de cycle, soit en pratique en moins de 10 microsecondes. En pratique on va laisser le microprocesseur 3 effectuer ces opérations pendant environ 100 microsecondes et on va le couper pendant le reste des 20 millisecondes qui correspondent à l'alternance du signal électrique d'alimentation (à 50 Hz). De ce fait on réduira la consommation de ce contrôle électronique dans un rapport de 100/20 000: de 200 fois par rapport à la situation qui prévaudrait s'il était en fonctionnement tout le temps.

Le mode de gestion du passage par zéro de la tension d'alimentation est particulièrement avantageux dans un mode d'utilisation dit par à-coups, "burst" en littérature anglo-saxonne, dans lequel la commande de l'appareil, une fois déclenchée, durera un certain nombre de périodes. La norme burst prévoit même que le nombre de périodes sera celui qui correspond à l'utilisation de 41 secondes. Après l'appareil est coupé. Donc le circuit 15 est capable, recevant une décision sur son entrée 17, de commander le mode burst en conséquence. Dans ce cas la mise en sommeil du microprocesseur 3 peut durer la durée de ces 41 secondes.

## Revendications

1. Dispositif de commande du fonctionnement d'un appareil comportant au moins un capteur de mesure (2), un circuit de commande (3, 38, 41) de ce fonctionnement en fonction d'un signal émis par le capteur, et une entrée d'alimentation en puissance électrique alternative de l'appareil, et comportant :
- une mémoire dite programme (10) contenant un jeu de fonctions d'appartenance, un jeu de règles de décision, et un programme de logique floue,
- un processeur de logique (3, 13) floue servant pour élaborer un signal de décision qui dépende à la fois du signal émis par le capteur, de ces fonctions d'appartenance, et de ces règles, et servant pour commander le fonctionnement de cet appareil avec ce signal de décision,
et caractérisé en ce qu'il comporte dans la mémoire programme,
- une fonction d'appartenance supplémentaire (11, 12) qui prend en compte, à titre de variable, le passage par zéro du signal d'alimentation électrique lui-même, et des règles qui tiennent compte de cette fonction d'appartenance supplémentaire.

2. Dispositif selon la revendication 1, caractérisé en ce qu'il comporte une entrée de changement de mode de fonctionnement de l'appareil et, dans la mémoire programme, une autre fonction d'appartenance supplémentaire qui prend en compte à titre de variable les signaux disponibles sur l'entrée de changement de mode, et des règles qui tiennent compte de ces fonctions d'appartenance.

3. Dispositif selon l'une des revendications 1 ou 2, caractérisé en ce que le processeur comporte un circuit pour mettre le dispositif de commande en sommeil après chaque passage par zéro (19) de la tension alternative de secteur (16) qui alimente le dispositif.

4. Dispositif selon l'une des revendications 1 à 3, caractérisé en ce que le capteur (2) est un capteur de température, l'appareil (1) un radiateur et le circuit de commande un circuit de régulation.

5. Dispositif selon la revendication 4, caractérisé en ce qu'il n'y a qu'un seul capteur de température (2).

6. Dispositif selon l'une des revendications 1 à 5, caractérisé en ce qu'il comporte entre le circuit de commande et l'appareil une cellule de transmission par courant porteur.

## Patentansprüche

1. Steuervorrichtung für den Betrieb eines Gerätes mit wenigstens einem Meßfühler (2), einem Steuerschaltkreis (3, 38, 41) für den Betrieb in Abhängigkeit von einem Signal, das durch den Fühler ausgegeben wurde, und einem Versorgungseingang für elektrische Wechselstromleistung des Gerätes, die außerdem umfaßt:
- einen Programmspeicher (10), der einen Satz von Zugehörigkeitsfunktionen, einen Satz von Entscheidungsregeln und ein Programm von unscharfer Logik umfaßt,
- einen Prozessor für unscharfe Logik (3, 13), der zum Erarbeiten eines Entscheidungssignals dient, das sowohl von dem von dem Fühler ausgegebenen Signal als auch von den Zugehörigkeitsfunktionen und von diesen Regeln abhängt, und der dazu dient, den Betrieb dieses Gerätes mit dem Entscheidungssignal zu steuern,
dadurch gekennzeichnet, daß sie in dem Programmspeicher umfaßt:
- eine zusätzliche Zugehörigkeitsfunktion (11, 12), die auf variable Art den Durchgang durch Null des elektrischen Versorgungssignals selbst berücksichtigt, und Regeln, die diese zusätzliche Zugehörigkeitsfunktion berücksichtigen.

2. Vorrichtung nach Anspruch 1, dadurch gekennzeichnet, daß sie einen Eingang für die Betriebsmodenänderung des Gerätes und in dem Programmspeicher eine andere zusätzliche Zugehörigkeitsfunktion, die auf variable Art und Weise die an dem Eingang für die Modeänderung verfügbaren Signale berücksichtigt, und Regeln umfaßt, die diese Zugehörigkeitsfunktionen berücksichtigen.

3. Vorrichtung nach einem der Ansprüche 1 oder 2, dadurch gekennzeichnet, daß der Prozessor einen Schaltkreis umfaßt, um die Steuervorrichtung in den Ruhezustand zu versetzen nach jedem Durchtritt durch Null (19) der Wechselspannung des Netzes (16), das die Einrichtung versorgt.

4. Vorrichtung nach einem der Ansprüche 1 bis 3, dadurch gekennzeichnet, daß der Fühler (2) ein Temperaturfühler ist, das Gerät (1) eine Heizung ist und der Steuerschaltkreis ein Regelschaltkreis ist.

5. Vorrichtung nach Anspruch 4, dadurch gekennzeichnet, daß nur ein Temperaturfühler (2) vorgesehen ist.

6. Vorrichtung nach einem der Ansprüche 1 bis 5, dadurch gekennzeichnet, daß sie zwischen dem Steuerschaltkreis und dem Gerät eine Zelle für die Übertragung über den Trägerstrom umfaßt.

## Claims

1. Device for controlling the operation of an appliance including at least one measurement sensor (2), a circuit (3, 38, 41) for controlling this operation according to a signal emitted by the sensor, and an input for supplying AC electrical power to the appliance, and having:
- a so-called program memory (10) containing a set of membership functions, a set of decision rules, and a fuzzy logic program,
- a fuzzy logic processor (3, 13) serving to produce a decision signal which depends on the signal emitted by the sensor, on these membership functions and on these rules, and serving to control the operation of this appliance with this decision signal,
and characterised in that it has, in the program memory,
- a supplementary membership function (11, 12) which takes into account, as a variable, the zero crossing of the electrical supply signal itself, and rules which take account of this supplementary membership function.

2. Device according to Claim 1, characterised in that it has an input for changing the operating mode of the appliance and, in the program memory, another supplementary membership function which takes into account, as a variable, the signals available at the mode change input, and rules which take account of these membership functions.

3. Device according to one of Claims 1 or 2, characterised in that the processor has a circuit for inactivating the control device after each zero crossing (19) of the mains AC voltage (16) which supplies the device.

4. Device according to one of Claims 1 to 3, characterised in that the sensor (2) is a temperature sensor, the appliance (1) a radiator and the control circuit a regulation circuit.

5. Device according to Claim 4, characterised in that there is only one temperature sensor (2).

6. Device according to one of Claims 1 to 5, characterised in that it has, between the control circuit and the appliance, a carrier-current transmission cell.
